# EUROPÄISCHE PATENTSCHRIFT

(11) **EP 3 017 493 B1**
(45) Veröffentlichungstag und Bekanntmachung des Hinweises auf die Patenterteilung: **25.04.2018**
(21) Anmeldenummer: 14737181.9
(22) Anmeldetag: 26.06.2014
(51) Int. Cl.: H01M 8/04

(54) **VERFAHREN ZUM STARTEN EINER BRENNSTOFFZELLE**
FUEL CELL STARTING METHOD
PROCÉDÉ DE DÉMARRAGE D'UNE PILE À COMBUSTIBLE

(30) Priorität: 03.07.2013 DE 102013212969
(43) Veröffentlichungstag der Anmeldung: 11.05.2016
(73) Patentinhaber: Robert Bosch GmbH, 70442 Stuttgart (DE)
(72) Erfinder: MAASS, Sebastian, 71272 Renningen-Malmsheim (DE); OHS, Jan Hendrik, 71229 Leonberg (DE)
(86) Internationale Anmeldenummer: PCT/EP2014/063545
(87) Internationale Veröffentlichungsnummer: WO 2015/000789

(56) Entgegenhaltungen:
- JP-A- 2005 116 402
- JP-A- 2005 166 424
- US-A1- 2004 072 042
- US-A1- 2013 029 238
- CARL A. REISER ET AL: "A Reverse-Current Decay Mechanism for Fuel Cells", ELECTROCHEMICAL AND SOLID-STATE LETTERS, Bd. 8, Nr. 6, 1. Januar 2005 (2005-01-01), Seite A273, XP055138633, ISSN: 1099-0062, DOI: 10.1149/1.1896466 in der Anmeldung erwähnt

## Beschreibung

Die Erfindung betrifft ein Verfahren zum Starten einer Brennstoffzelle gemäß des Oberbegriffs des Patentanspruchs 1, wobei Wasserstoff einem Anodenraum der Brennstoffzelle zugeführt wird, und zu Beginn des Startens Sauerstoff in dem Anodenraum der Brennstoffzelle vorhanden ist. Die Erfindung betrifft ebenfalls ein Brennstoffzellensystem gemäß dem Oberbegriff des unabhängigen Patentanspruchs 6.

### STAND DER TECHNIK

Im Betrieb einer Brennstoffzelle aus dem Stand der Technik werden Wasserstoff und Sauerstoff mit Hilfe eines Katalysators, der auf Kohlenstoffpartikel aufgebrachtes Platin enthält, elektrochemisch zu Wasser umgesetzt. Beim Starten einer Brennstoffzelle kann zunächst in einem Kathodenraum und in dem Anodenraum der Brennstoffzelle Sauerstoff vorhanden sein. Wird nun dem Anodenraum Wasserstoff zugeführt, so entsteht innerhalb des Anodenraums eine scharfe Wasserstoff/Sauerstoff-Gasfront, wobei der bereits zugeführte Wasserstoff sich in einem vorderen Bereich der Brennstoffzelle in dem Anodenraum befindet und sich Sauerstoff in dem gesamten Kathodenraum und in einem hinteren Bereich der Brennstoffzelle in dem Anodenraum befindet.

Die JP 2005 166424 zeigt ein Brennstoffzellensystem, in dem ein ungleiches Verhältnis von Wasserstoff und Luft innerhalb der Anode zum Start vermieden wird und in dem eine Verschlechterung der Elektrolytmembran durch Kohlenstoffvergiftung vermieden wird.

C. A. Reiser et al. beschreiben in Electrochem. Solid State Lett. 8 (6) A 273-A276, 2005 die elektrochemischen Vorgänge einer Brennstoffzelle in einem derartigen Zustand. Im vorderen Bereich der Brennstoffzelle können der Wasserstoff des Anodenraums an einer Anode und der Sauerstoff des Kathodenraums an einer Kathode elektrochemisch zu Wasser reagieren. Hierbei sind aufgrund der hohen Leitfähigkeit der Elektroden die Potentiale der Anode und der Kathode über den vorderen und den hinteren Bereich annähernd
konstant. Die im Vergleich zu den Elektroden geringe Leitfähigkeit des Elektrolyten führt dazu, dass im hinteren sauerstoffreichen Bereich der Brennstoffzelle eine hohe Potentialdifferenz zwischen der Kathode und einem Elektrolyten vorliegt. Im hinteren Bereich der Brennstoffzelle wird nun Sauerstoff zu Wasser an der Anode reduziert, während an der Kathode Kohlenstoff des Katalysators mit Hilfe von Wasser zu Kohlendioxid oxidiert wird. Hierdurch verliert der Katalysator seine Wirksamkeit und die Brennstoffzelle degradiert. Nach Reiser wird dieser Vorgang "reverse current decay" Mechanismus genannt.

### OFFENBARUNG DER ERFINDUNG

Es ist Aufgabe der vorliegenden Erfindung, ein Verfahren zum Starten einer Brennstoffzelle und ein Brennstoffzellensystem zur Verfügung zu stellen, die zumindest teilweise die Nachteile aus dem Stand der Technik überwinden, insbesondere bei denen die Brennstoffzelle weniger schnell degradiert bzw. langsam degradiert wird.

Zur Lösung der Aufgabe wird ein Verfahren mit sämtlichen Merkmalen des Anspruches 1, insbesondere des kennzeichnenden Teils, vorgeschlagen. Vorteilhafte Weiterbildungen des Verfahrens sind in den abhängigen Verfahrensansprüchen angegeben. Die Aufgabe wird weiterhin gelöst durch ein Brennstoffzellensystem mit sämtlichen Merkmalen des unabhängigen Anspruchs 6, insbesondere des kennzeichnenden Teils. Vorteilhafte Weiterbildungen des Brennstoffzellensystems sind in den abhängigen Vorrichtungsansprüchen angegeben. Merkmale und Details, die im Zusammenhang mit dem erfindungsgemäßen Verfahren beschrieben sind, gelten dabei auch im Zusammenhang mit dem erfindungsgemäßen Brennstoffzellensystem und umgekehrt. Dabei können die in den Ansprüchen und in der Beschreibung erwähnten Merkmale jeweils einzeln für sich oder in Kombination erfindungswesentlich sein.

Erfindungsgemäß ist vorgesehen, dass zu Beginn der Zuführung des Wasserstoffs so viel Wasserstoff zugeführt wird, dass Wasserstoff höchstens in einem stöchiometrischen Verhältnis zu dem Sauerstoff bei Eintritt in den Anodenraum vorliegt.

Wasserstoff und Sauerstoff gelangen somit höchstens in einem stöchiometrischen Verhältnis, also höchstens im Verhältnis 2:1, zu der Anode. I Weil der Wasserstoffanteil zum Sauerstoffanteil in einem Volumenstrom, der den Anodenraum betritt, zu Beginn der Wasserstoffzuführung höchstens stöchiometrisch vorliegt, reagiert der Wasserstoff mit dem im Anodenraum und in der Anode vorhandenen Sauerstoff vollständig ab, während sich die Sauerstoffmenge im Anodenraum und in der Anode verringert. Eine scharfe Wasserstoff/Sauerstoff-Gasfront wird somit erfindungsgemäß vermieden. Die Reaktion wird durch das vorhandene Platin katalysiert. Die Reaktion findet an der Anode statt. Eine elektrochemische Reaktion, bei der der Wasserstoff des Anodenraums mit dem Sauerstoff des Kathodenraums elektrochemisch reagiert, wird erfindungsgemäß weitgehend vermieden. Hierdurch wird eine hohe Potentialdifferenz zwischen der Kathode und dem Elektrolyten im hinteren Bereich der Brennstoffzelle verhindert. Somit kommt es nicht oder kaum zu der unerwünschten Reaktion des Katalysatorträgermaterials Kohlenstoff an der Kathode im hinteren Bereich der Brennstoffzelle. Der Katalysator bleibt zumindest weitgehend bzw. im Wesentlichen intakt. Die Brennstoffzelle degradiert weniger schnell als im Stand der Technik.

Dass zu Beginn der Wasserstoffzuführung Wasserstoff höchstens in einem stöchiometrischen Verhältnis zu dem Sauerstoff bei Eintritt in den Anodenraum vorliegt, bedeutet, dass der Molenbruch des Wasserstoff bei Eintritt in den Anodenraum zu Beginn der Wasserstoffzuführung höchstens doppelt so hoch ist wie der Molenbruch des Sauerstoffs im Anodenraum vor dem Starten der Brennstoffzelle. Ist z. B. der Anodenraum vor dem Starten der Brennstoffzelle mit Luft gefüllt und beträgt der Molenbruch des Sauerstoffs im Anodenraum somit ungefähr 0,21, so liegt der Molenbruch des Wasserstoffs bei Eintritt in den Anodenraum zu Beginn der Wasserstoffzuführung bei höchstens 0,42. Zu Beginn der Wasserstoffzuführung bedeutet hierbei ein Zeitbereich, bei dem der Sauerstoff im Anodenraum noch nicht reagiert hat. Erfindungsgemäß liegt zu Beginn der Wasserstoffzuführung der Molenbruch des Wasserstoffs unterhalb des Molenbruchs des Sauerstoffs bei Eintritt in den Anodenraum. Das heißt, das Verhältnis von Wasserstoff zu Sauerstoff bei Eintritt in den Anodenraum zu Beginn der Wasserstoffzuführung liegt unterhalb eines 1:1 Verhältnisses. Somit liegt Sauerstoff im Überschuss vor. Es hat sich hierbei gezeigt, dass durch eine derartig geringe Menge an Wasserstoff die Degradation noch besser vermieden werden konnte. Der Molenbruch des Wasserstoffs liegt erfindugsgemäß bei Eintritt in den Anodenraum zu Beginn der Wassertoffzuführung zwischen 0,09 und 0,13. Im besonders bevorzugten Wertebereich konnte eine Degradation der Brennstoffzelle um Werte zwischen 73% und 49% reduziert werden, ohne den Start der elektrischen Leistungsabgabe der Brennstoffzelle stark zu verzögern. Insbesondere kann das erfindungsgemäße Verfahren innerhalb von zehn Sekunden, bevorzugt innerhalb von fünf Sekunden, besonders bevorzugt innerhalb von drei Sekunden abgeschlossen sein.

Die oben genannten Verhältnisse zwischen Wasserstoff und Sauerstoff sind jeweils auf den Eintritt in den Anodenraum bezogen. Insbesondere beziehen sich die Verhältnisse auf ein Volumensegments eines Anodeneingangsstroms vor Eintritt in die Brennstoffzelle. Durch die Reaktionen innerhalb der Brennstoffzelle ändert sich das Verhältnis von Wasserstoff zu Sauerstoff, so dass in einem Anodenausgangsstrom ein anderes Verhältnis von Wasserstoff zu Sauerstoff herrschen kann.

Der Anodenraum ist über einer Anode, an der der Wasserstoff reagiert, angeordnet. Der Anodenraum kann als ein Gaskanal ausgestaltet sein und insbesondere eine Gasdiffusionsschicht ausgestaltet enthalten. Die Anode kann eine Anodenkatalysatorschicht enthalten. Die Anodenkatalysatorschicht kann Platin als Katalysator enthalten. Die Anode der Brennstoffzelle dient zur Oxidation des dem Anodenraum zugeführten Wasserstoffs. Die Brennstoffzelle weist ebenfalls eine Kathode zur Reduktion von Sauerstoff auf. Hierbei kann Sauerstoff enthaltene Luft durch einen Kompressor einem Kathodenraum, an dem sich die Kathode befindet, zugeführt werden. Zwischen der Anode und der Kathode kann sich ein Elektrolyt, beispielsweise ein Festkörperelektrolyt, z. B. eine Membran, befinden. Ein Einlassventil kann zur Dosierung einer Wasserstoffzufuhr zwischen einem Wasserstofftank und dem Anodenraum angeordnet sein. Bevorzugt befindet sich zwischen dem Einlassventil und dem Anodenraum eine Zufuhrleitung. Die Zufuhrleitung kann vor dem Starten Sauerstoff, insbesondere Luft, enthalten. Durch die Stellung des Einlassventils ist die absolute Menge Wasserstoff, die pro Zeiteinheit dem Anodenraum und/oder der Zufuhrleitung zugeführt wird, einstellbar.

Das Brennstoffzellensystem kann eine Rezirkulationsleitung enthalten, um den Anodenausgangsstrom dem Anodenraum erneut zuzuführen. Die erneute Zuführung wird als Rezirkulation bezeichnet. Der rezirkulierte Anodenausgangsstrom kann vor dem Anodenraum mit dem Wasserstoffstrom aus dem Wasserstofftank vermischt werden. Der rezirkulierte Anodenausgangsstrom und der Wasserstoffstrom aus dem Wasserstofftank bilden in diesem Fall den Anodeneingangsstrom. Die Zufuhrleitung kann einen Vermischungspunkt, in dem die Rezirkulationsleitung endet, enthalten. Ein Rezirkulationsmittel zur erneuten Zuführung des Anodenausgangsstroms kann als ein Gebläse ausgestaltet sein. Das Rezirkulationsmittel kann in der Rezirkulationsleitung angeordnet sein.

Eine Steuer- und/oder Regelungseinheit ist in dem Brennstoffsystem vorgesehen. Die Steuer- und/oder Regelungseinheit kann z. B. das Einlassventil und/oder das Rezirkulationsmittel kontrollieren.

Das Verhältnis des Wasserstoffs zu Sauerstoff, das zu Beginn der Wasserstoffzuführung bei Eintritt in den Anodenraum vorliegen soll, wird gewünschtes Verhältnis genannt. Es wird eine maximale absolute Menge Wasserstoff, die pro Zeiteinheit dem Anodenraum zugeführt wird, als die absolute Menge Wasserstoff, die pro Zeiteinheit dem Anodenraum zugeführt werden kann, um das gewünschte Verhältnis zu erhalten, festgesetzt. Diese maximale Menge wird während des gesamten Startens nicht überschritten. Insbesondere wird das Einlassventil zu Beginn so eingestellt, dass das gewünschte Verhältnis erreicht wird. Das Einlassventil wird erfindungsgemäß nicht weiter geöffnet, solange Sauerstoff in dem Anodenraum vorhanden ist.

Während des Startens sinkt der Molenbruch des Sauerstoffs im Anodenraum aufgrund der Reaktion des Wasserstoffs mit dem Sauerstoff des Anodenraums. Hierdurch ist es denkbar, dass im Verlauf des Startens das Verhältnis von Wasserstoff zu Sauerstoff über das gewünschte Verhältnis gelangt, wenn die absolute Menge Wasserstoff, die pro Zeiteinheit dem Anodenraum zugeführt wird, während des Startens konstant bleibt oder nur wenig sinkt. Dieser Verlauf des Startens ist vom Erfindungsgedanken mit umfasst.

Bevorzugt bleibt die Wasserstoffzuführung während des Startens konstant, bis kein Sauerstoff mehr in dem Anodenraum vorhanden ist. Das heißt, die absolute Menge Wasserstoff, die pro Zeiteinheit dem Anodenraum zugeführt wird, bleibt konstant, bis kein Sauerstoff mehr anodenseitig vorhanden ist. Insbesondere wird die Stellung des Einlassventils hierbei nicht verändert bzw. bleibt unverändert.

Bevorzugt wird Sauerstoff dem Kathodenraum erst zugeführt, wenn kein Sauerstoff mehr anodenseitig vorhanden ist. Insbesondere wird ein Kompressor erst angeschaltet, wenn kein Sauerstoff mehr anodenseitig vorhanden ist. Es hat sich experimentell herausgestellt, dass vor der Zuführung des Sauerstoffs zum Kathodenraum die Membran durch eine zu erwartende Druckdifferenz zwischen dem Anoden- und dem Kathodenraum nicht geschädigt wird.

Ein Zeitraum, der benötigt wird, um den Sauerstoff anodenseitig abreagieren zu lassen, wird im Folgenden Reaktionszeitraum genannt. Der Reaktionszeitraum kann insbesondere zwischen 0,1 Millisekunden und zehn Sekunden, bevorzugt zwischen 1 und 3 Sekunden betragen. Der Reaktionszeitraum ist beendet, wenn kein Sauerstoff anodenseitig mehr vorhanden ist. Der Begriff "kein Sauerstoff mehr" bedeutet, dass die Menge an Sauerstoff anodenseitig der Sauerstoffmenge anodenseitig während eines normalen Betriebs der Brennstoffzelle entspricht. Der Begriff "anodenseitig" umfasst hierbei ein Gesamtvolumen, aus dem der Sauerstoff entfernt werden muss. Das Gesamtvolumen ist das Volumen, aus dem durch den Anodeneingangsstrom Sauerstoff in den Anodenraum gelangen kann. Das Gesamtvolumen kann z. B. den Anodenraum, die Anode und die Rezirkulations- und Zufuhrleitung umfassen.

Der Reaktionszeitraum kann geschätzt werden und insbesondere als vorgegebener Wert in dem Verfahren festgelegt sein. Z. B. kann der vorgegebene Wert für den Reaktionszeitraum in der Steuer- und/oder Regelungseinheit gespeichert sein. Alternativ kann der Reaktionszeitraum aus der gesamten Menge an zugeführtem Wasserstoff und dem bekannten Gesamtvolumen, bei bekanntem Sauerstoffmolenbruch zu Beginn des Verfahrens bestimmt werden. Das Gesamtvolumen kann in der Steuer- und/oder Regelungseinheit hinterlegt sein. Die Bestimmung des Reaktionszeitraums kann in der Steuer- und/oder Regelungseinheit vorgenommen werden. Der Sauerstoffmolenbruch kann hierbei als vorgegebener Wert hinterlegt sein oder gemessen werden.

Die oben beschriebenen Verfahrensschritte können demnach bedeuten, dass die Wasserstoffzuführung während des Startens konstant bleibt, bis geschätzter Maßen kein Sauerstoff mehr anodenseitig vorhanden ist, und/oder dass Sauerstoff dem Kathodenraum erst zugeführt wird und/oder dem System eine elektrische Leistung erst entnommen wird, wenn geschätzter Maßen kein Sauerstoff mehr anodenseitig vorhanden ist.

Die Steuer- und/oder Regelungseinheit stellt das gewünschte Verhältnis ein. Insbesondere kann in der Steuer- und/oder Regelungseinheit die dafür notwendige Stellung des Einlassventils als fester Wert vorgegeben sein. Alternativ kann ein Druck vor dem Anodenraum gemessen werden und die Steuer- und Regelungseinheit kann das Einlassventil so einstellen, dass eine bestimmte Druckänderung vor dem Anodenraum erreicht wird. Der Druck oder die Druckdifferenz kann in der Steuer- und/oder Regelungseinheit als festgelegter Wert gespeichert sein. Alternativ kann die Steuer- und/oder Regelungseinheit aus dem Druck vor dem Öffnen des Einlassventils und dem Anteil an Sauerstoff, der sich - gemessen oder geschätzt- im Anodenraum befindet, die benötigte Druckerhöhung errechnen, aus der sich das gewünschte Verhältnis ergibt. Ebenfalls ist es alternativ denkbar, dass die Wasserstoff- und /oder die Sauerstoffkonzentration vor dem Eintritt in den Anodenraum gemessen wird und die Steuer- und Regelungseinheit das Einlassventil aufgrund dieser Werte einstellt.

Bevorzugt kann Wasserstoff so zugeführt werden, dass sich der Wasserstoff und der Sauerstoff in der Zufuhrleitung in dem gewünschten Verhältnis befinden. Wasserstoff und Sauerstoff können hierbei zumindest teilweise, bevorzugt ganz durchmischt sein. So kann bei Eintritt in den Anodenraum das gewünschte Verhältnis erreicht werden. Insbesondere ist vorgesehen, dass zu Beginn der Zuführung des Wasserstoffs so viel Wasserstoff zugeführt wird, dass Wasserstoff höchstens in einem stöchiometrischen Verhältnis zu dem Sauerstoff oder in einem anderen gewünschten Verhältnis in der Zufuhrleitung vorliegt.

Bevorzugt wird während des Startens der Anodenausgangsstrom dem Anodenraum erneut zugeführt. Der Anodenausgangsstrom wird insbesondere vollständig dem Anodenraum erneut zugeführt. Die Rezirkulation ermöglicht die Abreaktion des Sauerstoffs im Anodenraum sowie in der Rezirkulationsleitung. Das gewünschte Verhältnis zu Beginn der Wasserstoffzuführung kann in dem Anodeneingangsstrom, insbesondere in dem Vermischungspunkt, erreicht werden. Insbesondere wird der Anodenausgangsstrom mit Höchstgeschwindigkeit dem Anodenraum erneut zugeführt. Als Höchstgeschwindigkeit wird die für das Brennstoffzellensystem vorgesehene maximale Rezirkulationsgeschwindigkeit bezeichnet.

Es ist denkbar, dass vor der Zuführung des Wasserstoffs zum Anodenraum ein Auslassventil geschlossen ist oder wird. Es kann sein, dass die geschlossene Stellung vor der Zuführung des Wasserstoffs kontrolliert wird. Des Weiteren kann vor der Zuführung des Wasserstoffs zum Anodenraum, insbesondere nach dem Schließen des Auslassventils, ein Rezirkulationsmittel zur erneuten Zuführung des Anodenausgangsstroms zum Anodenraum eingeschaltet werden.

Sauerstoff ist insbesondere nach einem längeren Stopp der Brennstoffzelle in dem Anodenraum vorhanden. Beispielsweise stellt sich in einem zu einer Umgebung offenen Kathodenraum schnell nach dem Stopp der Brennstoffzelle ein Sauerstoffmolenbruch wie in der Umgebung, nämlich in der Regel 0,21, ein. Durch Diffusion gelangt der Sauerstoff in den Anodenraum, wo der Sauerstoff mit dem Wasserstoff reagiert. Bei längeren Stopps ist der Wasserstoff abreagiert und der Sauerstoff des Anoden- und des Kathodenraums befinden sich Im Gleichgewicht. In der Regel liegt also ein Sauerstoffmolenbruch von 0,21 und ein Druck von 1 atm im Anodenraum nach einem längeren Stopp vor. Das Verfahren kann hierauf abgestimmt sein. Die in der Steuer- und/oder Regelungseinheit hinterlegten Werte für eine Stellung des Einlassventils, für einen Molenbruch des Sauerstoffs, für einen Reaktionszeitraum und/oder für einen vor dem Anodenraum einzustellenden Druck können hierauf basieren.

Um eine unnötige Zeitverzögerung beim Starten der Brennstoffzelle zu vermeiden, kann vorgesehen sein, dass die Verfahrensschritte nur dann durchgeführt werden, wenn zu erwarten ist, dass der Wasserstoff im Anodenraum abreagiert ist. Hierzu kann zunächst abgefragt werden, ob eine vorgegebene Zeitspanne seit dem Stopp der Brennstoffzelle überschritten ist. Die vorgegebene Zeitspanne kann z. B. zwischen drei bis fünf Stunden festgelegt werden. Bei einem Einsatz in einem Brennstoffzellenfahrzeug können alternativ bei jedem Einstecken eines Zündschlüssels die vorgegebenen Verfahrensschritte, insbesondere frühzeitig, durchgeführt werden.

Das Verfahren kann damit enden, dass der Sauerstoff dem Kathodenraum zugeführt wird und ein Stromkreis der Brennstoffzelle geschlossen wird. Die Stellung des Einlassventils kann nun nach der geforderten elektrischen Leistung der Brennstoffzelle eingestellt werden.

Bevorzugt kann folgende Reihenfolge von Verfahrensschritten vorgesehen sein: Zunächst kann z. B. überprüft werden, ob eine vorgegebene Zeitspanne seit dem letzten Stopp überschritten wurde. Danach wird überprüft, ob das Auslassventil geschlossen und die Rezirkulationsleitung geöffnet ist. Danach wird das Rezirkulationsmittel, insbesondere mit höchster Leistung, eingeschaltet. Danach wird das Einlassventil so weit geöffnet, dass sich im Anodeneingangsstrom, insbesondere im Vermischungspunkt, das gewünschte Verhältnis von Wasserstoff zu Sauerstoff einstellt. Ist Luft vor Beginn des Startens im Anodenraum vorhanden, so beträgt der Molenbruch des Wasserstoffs im Anodeneingangsstrom zu Beginn der Wasserstoffzuführung höchstens 0,42. Bevorzugt ist der Molenbruch des Wasserstoffs im Anodeneingangsstrom zu Beginn kleiner als 0,21, besonders bevorzugt liegt dieser Molenbruch zwischen 0,09 und 0,13. Die Stellung des Einlassventils wird bevorzugt im Reaktionszeitraum konstant gehalten. Ist der Reaktionszeitraum überschritten, so kann die Steuer- und/oder Regelungseinheit veranlassen, dass ein Stromkreis mit einem Verbraucher und der Brennstoffzelle geschlossen wird, dass Sauerstoff zu der Kathode geleitet wird, insbesondere, dass ein Kompressor eingeschaltet wird, und dass die Wasserstoffzufuhr nach der geforderten elektrischen Leistung der Brennstoffzelle geregelt wird. Das Starten der Brennstoffzelle ist beendet, so dass ein Normalbetrieb der Brennstoffzelle erfolgt.

Die Aufgabe der vorliegenden Erfindung wird auch gelöst durch ein Brennstoffzellensystem mit einer Brennstoffzelle, die einen Anodenraum und einen Kathodenraum aufweist, mit einem Wasserstofftank, mit einem Einlassventil zur Dosierung einer Wasserstoffzufuhr zum Anodenraum und mit einer Steuer- und/oder Regelungseinheit. Die Steuer- und/oder Regelungseinheit ist derart ausgestaltet, dass das Einlassventil zu Beginn eines Startens der Brennstoffzelle nur so weit geöffnet wird, dass dem Anodenraum soviel Wasserstoff zugeführt wird, dass Wasserstoff und Sauerstoff bei Eintritt in den Anodenraum höchstens in einem stöchiometrischen Verhältnis vorliegen. Das Brennstoffzellensystem kann ein Rezirkulationsmittel zur erneuten Zuführung eines Anodenausgangsstroms zum Anodenraum aufweisen, wobei die Steuer- und/oder Regelungseinheit das Rezirkuationsmittel vor Öffnung des Einlassventils, insbesondere mit maximaler Leistung, eingeschaltet. In der Steuer- und/oder Regelungseinheit ist insbesondere ein zuvor beschriebenes Verfahren hinterlegt.

Bei der Brennstoffzelle kann es sich um eine Polymer-Elektrolyt-Membran-(PEM)-Brennstoffzelle handeln. Anstelle einer einzelnen Brennstoffzelle kann auch ein Stapel aus Brennstoffzellen verwendet werden. Hierbei wird als Anodenraum der Raum an den Anoden aller Brennstoffzellen bezeichnet. Die Brennstoffzelle kann in einem Brennstoffzellenfahrzeug angeordnet sein.

Weitere die Erfindung verbessernde Maßnahmen ergeben sich aus der nachfolgenden Beschreibung zu den Ausführungsbeispielen der Erfindung, welche in den Figuren schematisch dargestellt ist. Sämtliche aus den Ansprüchen, der Beschreibung oder der Zeichnung hervorgehende Merkmale und/oder Vorteile, einschließlich konstruktiver Einzelheiten, räumlicher Anordnung und Verfahrensschritte, können sowohl für sich als auch in den verschiedensten Kombinationen erfindungswesentlich sein. Es zeigen:
- Fig. 1: ein erfindungsgemäßes Brennstoffzellensystem
- Fig. 2: ein erfindungsgemäßes Verfahren

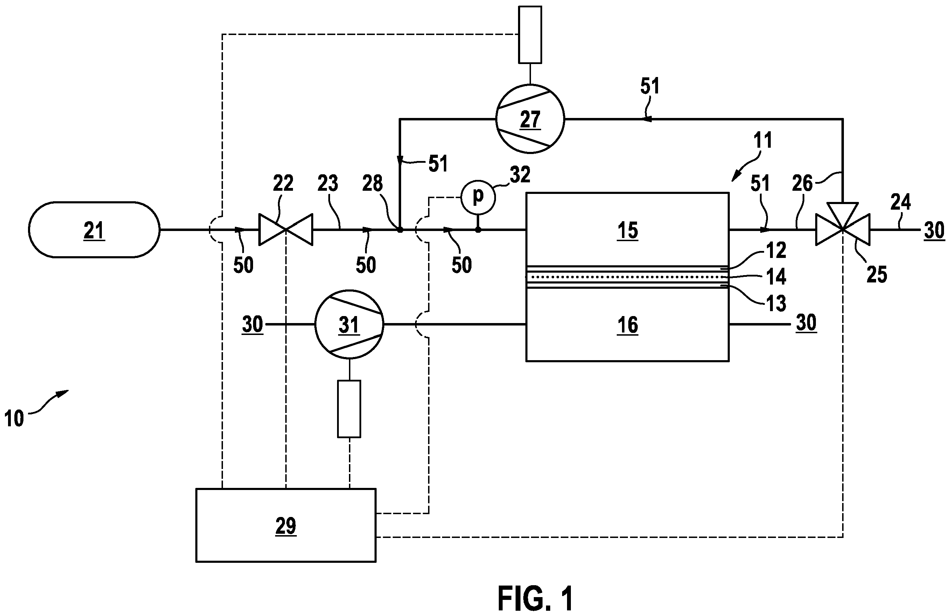

In Figur 1 ist ein erfindungsgemäßes Brennstoffzellensystem 10 dargestellt. Das Brennstoffzellensystem 10 weist einen Brennstoffzellenstapel auf, von dem in Fig. 1 nur exemplarisch eine Brennstoffzelle 11 dargestellt ist. Die Brennstoffzellen 11 des Brennstoffzellenstapels sind als PEM-Brennstoffzellen ausgestaltet. Jede Brennstoffzelle 11 weist eine Anode 12, eine Kathode 13 und eine dazwischen liegende Membran 14 als Elektrolyt auf. Während des Betriebs des Brennstoffzellensystems 10 wird Wasserstoff über einen Anodenraum 15 der Anode 12 zugeführt und Sauerstoff enthaltende Luft über einen Kathodenraum 16 der Kathode 13. Der Wasserstoff und der Sauerstoff werden im Betrieb der Brennstoffzellen 11 elektrochemisch zu Wasser umgesetzt, wobei eine elektrische Leistung erzeugt wird.

Um die Brennstoffzellen 11 mit Wasserstoff zu versorgen, weist das Brennstoffzellensystem 10 einen Wasserstofftank 21 mit einem nicht dargestellten Druckminderer, ein einstellbares Einlassventil 22 und einer sich daran anschließenden Zufuhrleitung 23 auf. Die Zufuhrleitung 23 endet am Anodenraum 15. Der Wasserstoff strömt gemäß den Pfeilen 50 zu dem Anodenraum 15. An den Anodenraum 15 schließt sich eine Rezirkulationsleitung 26 an, um im Betrieb nicht reagierten Wasserstoff der Brennstoffzelle 11 erneut zuführen zu können. In der Rezirkulationsleitung 26 ist ein Gebläse 27 als Rezirkulationsmittel vorgesehen, das einen Anodenausgangsstrom gemäß den Pfeilen 51 zur Zufuhrleitung 23 zurückführt. Die Rezirkulationsleitung 26 endet an einem Vermischungspunkt 28 in der Zufuhrleitung 23. Ein Drucksensor 32 misst den Druck in der Zufuhrleitung 23. Ein Anodeneingangsstrom ist definiert als Volumenstrom der Zufuhrleitung 23. Der Anodenausgangsstrom ist definiert als Volumenstrom, der den Anodenraum 15 verlässt.

Ein 3/2-Wegeventil 25 dient als Auslassventil, das zugleich eine Rezirkulation ermöglicht oder verhindert. Über das 3/2-Wegeventil 25 kann das Abgas durch eine Auslassleitung 24 in die Umgebung 30 ausgelassen werden. Die Sauerstoff enthaltene Luft wird mittels eines Kompressors 31 aus der Umgebung 30 in den Kathodenraum 16 geleitet und nach Durchlaufen der Brennstoffzelle 11 an die Umgebung 30 abgegeben.

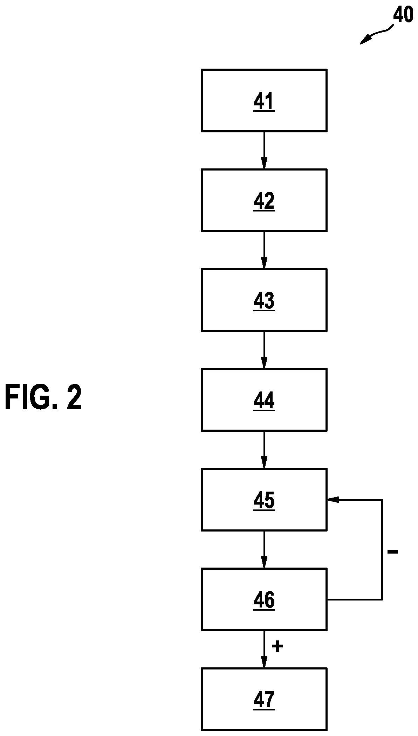

Das Brennstoffzellensystem 10 weist eine Steuer- und/oder Regelungseinheit 29 auf, die die Stellung des Einlassventils 22, des 3/2-Wegeventils 25 und die elektrische Leistung des Gebläses 27 und des Kompressors 31 überwacht und einstellt. Die Steuer- und/oder Regelungseinheit 29 erhält von einem Drucksensor 32 gemessene Druckwerte für den Anodeneingangsstrom. In der Steuer- und/oder Regelungseinheit 29 ist das folgende erfindungsgemäße Verfahren hinterlegt, das in Fig. 2 dargestellt ist.

In Fig. 2 ist ein Ausführungsbeispiel für ein erfindungsgemäßes Verfahren 40 dargestellt. Zu Beginn des Verfahrens ist in dem Anodenraum 15, in der Zufuhrleitung 23 und in der Rezirkulationsleitung 26 Luft enthalten. In einem ersten Verfahrensschritt 41 wird überprüft, ob seit dem letzten Stopp der Brennstoffzelle 11 ein vorgegebener Zeitraum überschritten ist. In einem zweiten Schritt 42 wird die Stellung des 3/2 Wegeventils 25 überprüft. Das 3/2 Wegeventil 25 soll zur Rezirkulationsleitung 26 geöffnet und zur Auslassleitung 24 geschlossen sein. In einem dritten Verfahrensschritt 43 wird das Gebläse 27 mit höchster Leistung eingeschaltet. Dadurch wird die Luft, die sich in dem Anodenraum 15, in der Zufuhrleitung 23, in der Rezirkulationsleitung 26 und in der Auslassleitung 24 befindet, mit höchster Geschwindigkeit gemäß den Pfeilen 50, 51 bewegt.

Danach wird in einem vierten Verfahrensschritt 44 das Einlassventil 22 in eine in der Steuer- und/oder Regelungseinheit 29 vorgegebene Stellung gebracht, durch die ein vorgegebener Druck am Drucksensor 32 gemessen werden kann. In der eingestellten Stellung des Einlassventils 22 entspricht das Verhältnis des Wasserstoffs zu Sauerstoff am Vermischungspunkt 28 dem gewünschten Verhältnis, z. B. kann der Molenbruch des Wasserstoffs am Vermischungspunkt 28 0,13 betragen.

In einem fünften Verfahrensschritt 45 wird der Zeitraum, seit dem das Einlassventil 22 geöffnet ist, detektiert. In einem sechsten Verfahrensschritt 46 wird abgefragt, ob der Zeitraum dem in der Steuer- und/oder Regelungseinheit 29 festgelegten Reaktionszeitraum entspricht. Ist dieses noch nicht der Fall, was mit "-" in Fig. 2 dargestellt ist, so werden die Verfahrensschritte 45 und 46 wiederholt. Ist der vorgegebene Zeitraum erreicht worden, wie mit "+" in Fig. 2 dargestellt, so wird in einem siebten Verfahrensschritt 47 der Kompressor 31 eingeschaltet, der notwendige Wasserstoffvolumenstrom dem Anodenraum 15 zugeführt und ggf. ein Anodeneingangsdruck angepasst. Danach wird ein nicht dargestellter Stromkreis der Brennstoffzelle 11 geschlossen. Die Stellung des Einlassventils 22 kann nach der angeforderten elektrischen Leistung der Brennstoffzellen 11 eingestellt werden. Falls weniger als 0.79 bar Stickstoff im Anodenraum 15 vorhanden sein soll, muss der Anodenausgangsstrom aus dem Anodenraum 15 über das Auslassventil 25 aus dem Brennstoffzellensystem 10 entlassen werden.

Das Verfahren zum Starten der Brennstoffzellen 11 ist somit beendet. Optional können insbesondere der erste, zweite und/oder siebte Verfahrensschritt 41, 42, 47 weggelassen werden.

## Patentansprüche

1. Verfahren (40) zum Starten einer Brennstoffzelle (11), wobei Wasserstoff einem Anodenraum (15) der Brennstoffzelle (11) zugeführt wird, und zu Beginn des Startens Sauerstoff in dem Anodenraum (15) der Brennstoffzelle (11) vorhanden ist,
**dadurch gekennzeichnet,**
**dass** zu Beginn der Zuführung des Wasserstoffs so viel Wasserstoff dem Anodenraum (15) zugeführt wird, dass der Wasserstoff höchstens in einem stöchiometrischen Verhältnis zu der im Anodenraum (15) vorhandenen Menge an Sauerstoff vorliegt,
wobei zu Beginn der Zuführung des Wasserstoffs der Molenbruch des Wasserstoffs innerhalb eines Volumensegments eines Anodeneingangsstroms vor dem Eintritt in die Brennstoffzelle (11) unterhalb des Molenbruchs des im Anodenraum (15) vorhandenen Sauerstoffs liegt, wobei der Molenbruch des Wasserstoffs hierbei zwischen 0,09 und 0,13 liegt,
**dass** das Einlassventil (22) zur Dosierung einer Wasserstoffzufuhr nicht weiter geöffnet wird, solange Sauerstoff in dem Anodenraum vorhanden ist.

2. Verfahren nach Anspruch 1 oder 2, **dadurch gekennzeichnet, dass** die Wasserstoffzuführung während des Startens konstant bleibt, bis kein Sauerstoff mehr anodenseitig vorhanden ist.

3. Verfahren nach einem der vorhergehenden Ansprüche,
**dadurch gekennzeichnet, dass** während des Startens ein Anodenausgangsstrom dem Anodenraum (15) erneut zugeführt wird, wobei der Anodenausgangsstrom mit höchstmöglicher Geschwindigkeit dem Anodenraum (15) erneut zugeführt wird.

4. Verfahren nach einem der vorhergehenden Ansprüche, **dadurch gekennzeichnet, dass** vor der Zuführung des Wasserstoffs zum Anodenraum (15) ein Auslassventil (25) geschlossen ist.

5. Verfahren nach einem der vorhergehenden Ansprüche, **dadurch gekennzeichnet, dass** vor der Zuführung des Wasserstoffs zum Anodenraum (15) ein Rezirkulationsmittel (27) zur erneuten Zuführung des Anodenausgangsstroms zum Anodenraum (15) eingeschaltet wird.

6. Brennstoffzellensystem (10)
mit einer Brennstoffzelle (11), die einen Anodenraum (15) und einen Kathodenraum (16) aufweist,
mit einem Wasserstofftank (21),
mit einem Einlassventil (22) zur Dosierung einer Wasserstoffzufuhr zum Anodenraum (15)
und mit einer Steuer- und/oder
Regelungseinheit (29) **dadurch**
**gekennzeichnet,**
**dass** die Steuer- und/oder Regelungseinheit (29) derart ausgestaltet ist, dass das Einlassventil (22) in einem Zeitbereich, bei dem der Sauerstoff im Anodenraum (15) noch nicht reagiert hat, zu Beginn der Zuführung des Wasserstoffs, nur so weit geöffnet wird, dass dem Anodenraum (15) so viel Wasserstoff zugeführt wird,
**dass** der Wasserstoff höchstens in einem stöchiometrischen Verhältnis zu der im Anodenraum (15) vorhandenen Menge an Sauerstoff vorliegt, wobei zu Beginn der Zuführung des Wasserstoffs der Molenbruch des Wasserstoffs auf ein Volumensegment eines Anodeneingangsstroms vor dem Eintritt in die Brennstoffzelle (11) unterhalb des Molenbruchs des im Anodenraum (15) vorhandenen Sauerstoffs liegt, wobei der Molenbruch des Wasserstoffs hierbei zwischen 0.09 und 0, 13 liegt, dass das Einlassventil (22) zur Dosierung einer Wasserstoffzufuhr nicht weiter geöffnet wird, solange Sauerstoff in dem Anodenraum vorhanden ist.

7. Brennstoffzellensystem (10) nach Anspruch 6, **dadurch gekennzeichnet, dass** das Brennstoffzellensystem (10) ein Rezirkulationsmittel (27) zur erneuten Zuführung eines Anodenausgangsstroms zum Anodenraum (15) aufweist, wobei die Steuer- und/oder Regelungseinheit (29) das Rezirkuationsmittel (27) vor Öffnung des Einlassventils (22), insbesondere mit maximaler Leistung, einschaltet.

8. Brennstoffzellensystem (10) nach Anspruch 6 oder 7 **dadurch gekennzeichnet, dass** in der Steuer- und/oder Regelungseinheit (29) ein Verfahren nach einem der Ansprüche 1 bis 5hinterlegt ist.

## Claims

1. Method (40) for starting a fuel cell (11), wherein hydrogen is supplied to an anode chamber (15) of the fuel cell (11) and, at the beginning of starting, oxygen is present in the anode chamber (15) of the fuel cell (11),
**characterized in that**, at the beginning of supplying the hydrogen, enough hydrogen is supplied to the anode chamber (15) that the hydrogen is at most in a stoichiometric ratio with the amount of oxygen present in the anode chamber (15),
wherein, at the beginning of supplying the hydrogen, the molar fraction of the hydrogen within a volume segment of an anode inlet stream prior to entry into the fuel cell (11) lies below the molar fraction of the oxygen present in the anode chamber (15), wherein the molar faction of the hydrogen here lies between 0.09 and 0.13,
**in that** the inlet valve (22) for metering a supply of hydrogen is not opened any further as long as oxygen is present in the anode chamber.

2. Method according to Claim 1 or 2, **characterized in that** the supplying of hydrogen remains constant during starting until no more oxygen is present on the anode side.

3. Method according to one of the preceding claims, **characterized in that**, during starting, an anode outlet stream is re-supplied to the anode chamber (15), wherein the anode outlet stream is re-supplied to the anode chamber (15) at the highest possible speed.

4. Method according to one of the preceding claims, **characterized in that**, before supplying the hydrogen to the anode chamber (15), an outlet valve (25) is closed.

5. Method according to one of the preceding claims, **characterized in that**, before supplying the hydrogen to the anode chamber (15), a recirculation means (27) is switched on for re-supplying the anode outlet stream to the anode chamber (15).

6. Fuel cell system (10)
with a fuel cell (11), which has an anode chamber (15) and a cathode chamber (16),
with a hydrogen tank (21),
with an inlet valve (22) for metering a supply of hydrogen to the anode chamber (15)
and with an open-loop and/or
closed-loop control unit (29),
**characterized**
**in that** the open-loop and/or closed-loop control unit (29) is designed in such a way that, in a time range in which the oxygen in the anode chamber (15) has not yet reacted, the inlet valve (22) is only opened to such an extent at the beginning of supplying the hydrogen that enough hydrogen is supplied to the anode chamber (15)
that the hydrogen is at most in a stoichiometric ratio with the amount of oxygen present in the anode chamber (15),
wherein, at the beginning of supplying the hydrogen, the molar fraction of the hydrogen based on a volume segment of an anode inlet stream prior to entry into the fuel cell (11) lies below the molar fraction of the oxygen present in the anode chamber (15), wherein the molar fraction of the hydrogen here lies between 0.09 and 0.13,
**in that** the inlet valve (22) for metering a supply of hydrogen is not opened any further as long as oxygen is present in the anode chamber.

7. Fuel cell system (10) according to Claim 6, **characterized in that** the fuel cell system (10) has a recirculation means (27) for re-supplying an anode outlet stream to the anode chamber (15), wherein the open-loop and/or closed-loop control unit (29) switches on the recirculation means (27), in particular with maximum power, before opening of the inlet valve (22).

8. Fuel cell system (10) according to Claim 6 or 7, **characterized in that** a method according to one of Claims 1 to 5 is stored in the open-loop and/or closed-loop control unit (29).

## Revendications

1. Procédé (40) de démarrage d'une pile à combustible (11), dans lequel on fournit de l'hydrogène à une chambre anodique (15) de la pile à combustible (11), et au début du démarrage il se trouve de l'oxygène dans la chambre anodique (15) de la pile à combustible (11),
**caractérisé en ce que**
au début de la fourniture d'hydrogène on fournit à la chambre anodique (15) une quantité d'hydrogène telle que l'hydrogène soit présent au maximum dans une proportion stoechiométrique par rapport à la quantité d'oxygène présente dans la chambre anodique (15),
dans lequel au début de la fourniture de l'hydrogène la fraction molaire de l'hydrogène à l'intérieur d'un segment volumétrique d'un courant d'entrée d'anode avant l'entrée dans la pile à combustible (11) se situe en dessous de la fraction molaire de l'oxygène présent dans la chambre anodique (15), la fraction molaire de l'hydrogène se situant en l'occurrence entre 0,09 et 0,13, et
on n'ouvre pas plus largement la soupape d'admission (22) pour le dosage d'une fourniture d'hydrogène aussi longtemps qu'il se trouve de l'oxygène dans la chambre anodique.

2. Procédé selon la revendication 1 ou 2, **caractérisé en ce que** la fourniture d'hydrogène reste constante pendant le démarrage, jusqu'à ce qu'il ne se trouve plus d'oxygène du côté anodique.

3. Procédé selon l'une quelconque des revendications précédentes, **caractérisé en ce que** l'on fournit de nouveau à la chambre anodique (15) un courant de sortie d'anode pendant le démarrage, dans lequel on fournit de nouveau le courant de sortie d'anode à la chambre anodique (15) avec la plus grande vitesse possible.

4. Procédé selon l'une quelconque des revendications précédentes, **caractérisé en ce qu'**une soupape d'échappement (25) est fermée avant la fourniture de l'hydrogène à la chambre anodique (15).

5. Procédé selon l'une quelconque des revendications précédentes, **caractérisé en ce qu'**avant la fourniture de l'hydrogène à la chambre anodique (15), on enclenche un moyen de recirculation (27) pour la fourniture renouvelée du courant de sortie d'anode à la chambre anodique (15).

6. Système de pile à combustible (10)
avec une pile à combustible (11), qui présente une chambre anodique (15) et une chambre cathodique (16),
avec un réservoir d'hydrogène (21),
avec une soupape d'admission (22) pour le dosage d'une fourniture d'hydrogène à la chambre anodique (15),
et avec une unité de commande et/ou de régulation (29), **caractérisé en ce que**
l'unité de commande et/ou de régulation (29) est configurée de telle manière que la soupape d'admission (22) ne soit ouverte, dans une plage de temps dans laquelle l'oxygène dans la chambre anodique (15) n'a pas encore réagi, au début de la fourniture de l'hydrogène, que dans la mesure où on fournit à la chambre anodique (15) une quantité d'hydrogène telle que l'hydrogène soit présent au maximum dans une proportion stoechiométrique par rapport à la quantité d'oxygène présente dans la chambre anodique (15), dans lequel au début de la fourniture de l'hydrogène la fraction molaire de l'hydrogène sur un segment volumétrique d'un courant d'entrée d'anode avant l'entrée dans la pile à combustible (11) se situe en dessous de la fraction molaire de l'oxygène présent dans la chambre anodique (15), la fraction molaire de l'hydrogène se situant en l'occurrence entre 0,09 et 0,13, et
on n'ouvre pas plus largement la soupape d'admission (22) pour le dosage d'une fourniture d'hydrogène aussi longtemps qu'il se trouve de l'oxygène dans la chambre anodique.

7. Système de pile à combustible (10) selon la revendication 6, **caractérisé en ce que** le système de pile à combustible (10) présente un moyen de recirculation (27) pour la fourniture renouvelée d'un courant de sortie d'anode à la chambre anodique (15), dans lequel l'unité de commande et/ou de régulation (29) enclenche le moyen de recirculation (27) avant l'ouverture de la soupape d'admission (22), en particulier avec une puissance maximale.

8. Système de pile à combustible (10) selon la revendication 6 ou 7, **caractérisé en ce qu'**un procédé selon l'une quelconque des revendications 1 à 5 est stocké dans l'unité de commande et/ou de régulation (29).
